# EUROPEAN PATENT SPECIFICATION

(11) **EP 4 250 155 B1**
(45) Date of publication and mention of the grant of the patent: **04.02.2026**
(21) Application number: 20845769.7
(22) Date of filing: 30.12.2020
(51) Int. Cl.: G06F 21/57, G06F 21/53, G06F 21/30, G06F 21/56, G06F 8/65

(54) **COMPUTER DEVICE INCLUDING SEPARATED SECURITY MODULE, AND METHOD FOR UPDATING SECURITY MODULE**
RECHNERVORRICHTUNG MIT SEPARATEM SICHERHEITSMODUL UND VERFAHREN ZUR AKTUALISIERUNG EINES SICHERHEITSMODULS
DISPOSITIF INFORMATIQUE COMPRENANT UN MODULE DE SÉCURITÉ SÉPARÉ, ET PROCÉDÉ DE MISE À JOUR DE MODULE DE SÉCURITÉ

(30) Priority: 17.11.2020 KR 20200153534
(43) Date of publication of application: 27.09.2023
(73) Proprietor: SECUVE Co., Ltd., Seoul 08390 (KR)
(72) Inventor: HONG, Ki-yoong, Seoul 06966 (KR)
(74) Representative: Frenkel, Matthias Alexander
(86) International application number: PCT/KR2020/019418
(87) International publication number: WO 2022/107991

(56) References cited:
- KR-B1- 101 429 877
- KR-B1- 101 710 328
- KR-B1- 101 805 310
- US-A1- 2015 169 865
- US-A1- 2019 102 551
- US-A1- 2019 332 373

## Description

### Technical Field

The present disclosure relates to a security module of a computer device, and a method for updating the security module.

### Background Art

Malware is a generic term for all types of malicious software that may adversely affect computer devices. Known types of malware include computer viruses, worms, trojan horses, spyware, adware, rootkits, ransomware, etc.

Some of security modules designed to deal with malware threats are installed at a kernel level of a computer device and interface with an operating system (OS) kernel, and are thus fundamentally responsible for the security of hardware and processes of the computer device. A security module installed at a kernel level is written in code that enables hooking into an OS kernel to monitor activities of a computer device.

However, once such a security module is installed in a computer device, it may be difficult to update the security module in some OS environments. That is, upgrading to other code to update a security function of the security module may require modification of an OS kernel itself, such as recompiling the OS kernel. As a result, a developer or supplier of the security module may be unable to update the security module quickly and may have to wait until the next upgrade on the OS kernel itself.

In this way, since it is difficult to update a security module in some types of OSs, computer devices can be easily vulnerable to malicious attacks. This inflexibility is undesirable in today's rapidly changing cybersecurity environment. One of the factors that can effectively cope with malware attacks is rapidity and flexibility to update functions of a security module quickly and easily at the rate exceeding the rate of change in a malware attack strategy. US 2019/102551 A1 discloses a security agent for a host computing device implemented with multiple levels of indirection from an operating system (OS) kernel of the computing device in order to facilitate software upgrades for the security agent. In the document it is described that an unserviceable kernel-mode component of the security agent may directly interface with the OS kernel and hook into a function (e.g., a security callback function) of the OS kernel in a first level of indirection, while a serviceable kernel-mode component of the security agent, which is upgradable, may indirectly interface with the OS kernel via the unserviceable kernel-mode component in a second level of indirection, and the serviceable kernel-mode component may be configured to process events, and/or data related thereto, received from the OS kernel via the unserviceable kernel-mode component in order to monitor activity on the computing device for malware attacks.

### Disclosure

### Technical Problem

One of the objectives of the present disclosure is to enable a security module installed at a kernel level to be updated quickly and easily.

Another objective of the present disclosure is to strengthen a security function of a computer device including a security module installed at a kernel level.

### Technical Solution

The invention is defined by the appended claims.

### Advantageous Effects

According to the present disclosure, the security module installed as the kernel level of the computer device is realized as a separated security module divided into the non-updatable part and the updatable part, and the non-updatable part directly interfaces with the OS kernel and the updatable part indirectly interfaces with the OS kernel through the non-updatable part, so that only the updatable part of the security module can be updated independently of the OS kernel. According to the present disclosure, the security module installed at the kernel level can be updated quickly and easily.

In addition, according to the present disclosure, the security module can be updated by changing or modifying only code of the updatable part without changing the non-updatable part directly connected to the OS kernel, so that the security module can be updated without recompiling the OS kernel. According to the present disclosure, the computer device can be immediately updated without rebooting.

In addition, according to the present disclosure, when a request for updating the security module is received, an update requesting object is verified, and when a security module update version is received, the received security module update version is verified, so that security can be further strengthened through two-factor verification of the update requesting object and the update version.

### Description of Drawings

FIG. 1 is a diagram illustrating various use environments of a computer device according to an embodiment of the present disclosure.
FIG. 2 is a diagram illustrating a configuration related to an OS kernel and a security module of a computer device according to an embodiment of the present disclosure.
FIG. 3 is a diagram illustrating a method for updating a security module of a computer device according to an embodiment of the present disclosure.

### Best Mode

Hereinafter, embodiments of the present disclosure will be described in detail with reference to the accompanying drawings.

The present disclosure may be embodied in various forms, and should not be construed as being limited to the embodiments described herein. The described embodiments are provided to sufficiently convey the scope of the present disclosure to those skilled in the art to which the present disclosure pertains. The principles and features of the present disclosure may be applied in a wide variety of embodiments without departing from the scope of the present disclosure.

In addition, in describing the embodiments, matters well known in the art to which the present disclosure pertains or not directly related to the present disclosure will not be described in order to clearly convey the essence of the present disclosure without obscurity. In the attached drawings, some elements may be exaggerated, omitted, or roughly illustrated, and the size of each element does not exactly correspond to an actual size of each element. Like reference numerals are given to the same or corresponding elements throughout the accompanying drawings.

Unless defined otherwise, all terms used herein, including technical and scientific terms, have the same meaning as understood by those skilled in the art to which the present disclosure pertains. In the meantime, although the singular forms are stated, the plural forms are included, unless the context clearly indicates otherwise.

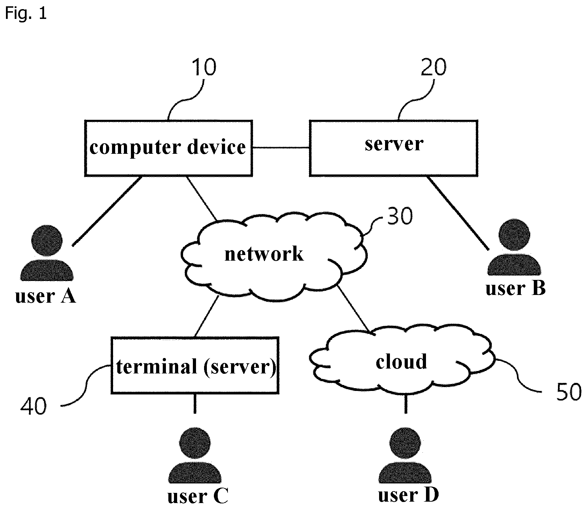

FIG. 1 is a diagram illustrating various use environments of a computer device according to an embodiment of the present disclosure.

Referring to FIG. 1, a computer device 10 according to an embodiment of the present disclosure may be used in various environments. For example, user A may use the computer device 10 by directly accessing the computer device 10. As another example, user B may use the computer device 10 by accessing a server 20 connected to the computer device 10 over an internal communication network. As still another example, user C may use the computer device 10 by accessing a terminal 40 (or server) connected to the computer device 10 over a network 30, such as the Internet. As still another example, user D may use the computer device 10 by accessing a cloud 50 with a user terminal (not shown), wherein the cloud is connected to the computer device 10 over the network 30.

The computer device 10 is a computer device including an OS kernel and a separated security module, which will be described below, of the present disclosure, and there is no particular limitation on the type of the computer device. The terminal 40 is a term including a portable user electronic device. In some embodiments, the terminal 40 may be a server. Using the computer device 10 by a user include updating the security module included in the computer device 10 to a new version.

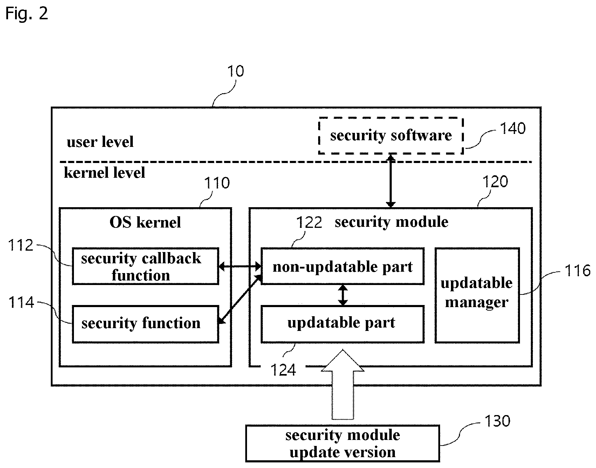

FIG. 2 is a diagram illustrating a configuration related to an OS kernel and a security module of a computer device according to an embodiment of the present disclosure.

Referring to FIG. 2, a computer device 10 according to an embodiment of the present disclosure includes an OS kernel 110 and a security module 120 that are installed at a kernel level to operate. FIG. 2 shows the computer device 10, focusing on the OS kernel 110 and the security module 120 directly related to the present disclosure, but other various known components (for example, a processor, a memory, an input/output device, a communication module, etc.) may be included in the computer device 10.

The OS kernel 110 has a security callback function 112 and a security function 114, and the security module 120 includes a non-updatable part 122, an updatable part 124, and an update manager 126. The OS kernel 110 means a kernel of any OS type, and examples of the OS include all commercial OSs, such as Unix, Linux, Mac, Windows, etc. In that the security module 120 is divided into the non-updatable part 122 and the updatable part 124, the security module 120 of the present disclosure may be referred to as a 'separated security module'.

The non-updatable part 122 of the security module 120 may directly interface with the OS kernel 110 and may be connected to the security callback function 112 of the OS kernel 110. In contrast, the updatable part 124 of the security module 120 indirectly interfaces with the OS kernel 110 through the non-updatable part 122. In the specification, the meaning of interfacing does not refer to a physical interface, but means interacting through data transmission and reception.

The non-updatable part 122 is not updatable in that code of the non-updatable part 122 is unable to be easily changed or modified without complicated procedures for modifying code and recompiling the OS kernel 110 itself.

Compared to the non-updatable part 122, the updatable part 124 is updatable in that code change or modification is easy. That is, the updatable part 124 may be easily changed or modified without recompiling the OS kernel 110. In addition, the updatable part 124 is immediately updatable without rebooting the computer device 10.

When the security module 120 is installed in the computer device 10, the non-updatable part 122 directly interfaces with the OS kernel 110 and the updatable part 124 indirectly interfaces with the OS kernel 110 through the non-updatable part 122. Accordingly, the separated security module 120 provides appropriate separation between the updatable part 124 and the OS kernel 110. This allows a developer or supplier of the security module 120 to update the security module 120 independently of the OS kernel 110. That is, the developer or supplier of the security module 120 may update the security module 120 by changing or modifying only code of the updatable part 124 without changing the non-updatable part 122 directly connected to the OS kernel 110.

The security callback function 112 of the OS kernel 110 may be called in response to a particular activity of the computer device 10, such as file opening, network connection opening, or application running.

In a case in which the security module 120 does not exist, the security callback function 112 of the OS kernel 110 refers to a particular security function 114 of the OS kernel 110. The security function 114 provides an access control security policy at the kernel level.

In the case in which the security module 120 does not exist, when the security callback function 112 is called (in response to file opening, for example), the security callback function 112 makes a query to the security function 114 to request authority to open a file and the security function 114 returns a response to the query. The response indicates whether the process (for example, file opening and running) is allowed. In the case in which the security module 120 does not exist, this security mechanism of the OS kernel 110 is fixed, so a malicious attacker can easily judge how the security function works in the OS kernel 110 and can easily determine how to defeat the security mechanism. That is, since the fixed security mechanism cannot be easily changed, an attacker has enough time to develope an attack strategy to circumvent the security mechanism of the OS kernel 110. Accordingly, dynamically updating the security module 120, specifically, the updatable part 124 of the security module 120, may make it difficult for an attacker to defeat or circumvent the security mechanism.

In the meantime, in the case in which the security module 120 of the present disclosure is implemented, the non-updatable part 122 of the security module 120 may be configured to hook the security callback function 112 of the OS kernel 110. This hooking means that at the OS kernel 110, the code in which the security callback function 112 refers to the security function 114 is replaced with another code in which the security callback function 112 refers to the non-updatable part 122 of the security module 120 instead of the security function 114. Accordingly, when the security callback function 112 is called, the security callback function 112 may transmit a query to the non-updatable part 122 and the non-updatable part 122 may forward the query to the updatable part 124. This provides the security module 120 with an ability to monitor events and/or related data of the computer device 10.

The updatable part 124 that has received a query generates and returns a response indicating whether execution of a process is allowed. That is, the updatable part 124 may determine the characteristics of a query (for example, a type of callback), may search for a parameter related to the determination, may analyze an event and/or data related to the query, and may judge whether the analyzed event and/or data is associated with malicious code. On the basis of the judgement, the updatable part 124 may generate a response to a query and may provide the response to the OS kernel 110 through the non-updatable part 122. For example, when a query is related to a request for opening a particular file, the updatable part 124 may determine that the request for opening the particular file is associated with malicious code, may generate a response indicating suspension of execution of a process for opening the particular file, and may return the response to the OS kernel 110.

In the meantime, in some embodiments, the updatable part 124 that has received a query from the OS kernel 110 through the non-updatable part 122 may interface with the security software 140 that is installed at the user level of the computer device 10 and is in operation and may request analysis of an event and/or data related to the query, and determination of whether there is association with malicious code.

In addition, in some embodiments, the non-updatable part 122 and/or the updatable part 124 may interact with the security function 114 of the OS kernel 110. This interaction with the security function 114 may occur after the non-updatable part 122 receives a query from the security callback function 112. For example, the non-updatable part 122 may directly make a query to the security function 114 about the access control security policy of the OS kernel 110. As another example, the updatable part 124 may indirectly make a query to the security function 114 through the non-updatable part 122. The security policy may be considered when the updatable part 124 generates a response to a query.

The non-updatable part 122 may be installed to occupy a minimum memory capacity and may be executed to consume minimum resources. That is, the non-updatable part 122 consists of much less code than the updatable part 124, and most of the functions of the security module 120 may be provided by the code of the updatable part 124. The non-updatable part 122 serves as a passage for primarily providing separation between the OS kernel 110 and the updatable part 124 and only forwarding a query/response between the OS kernel 110 and the updatable part 124.

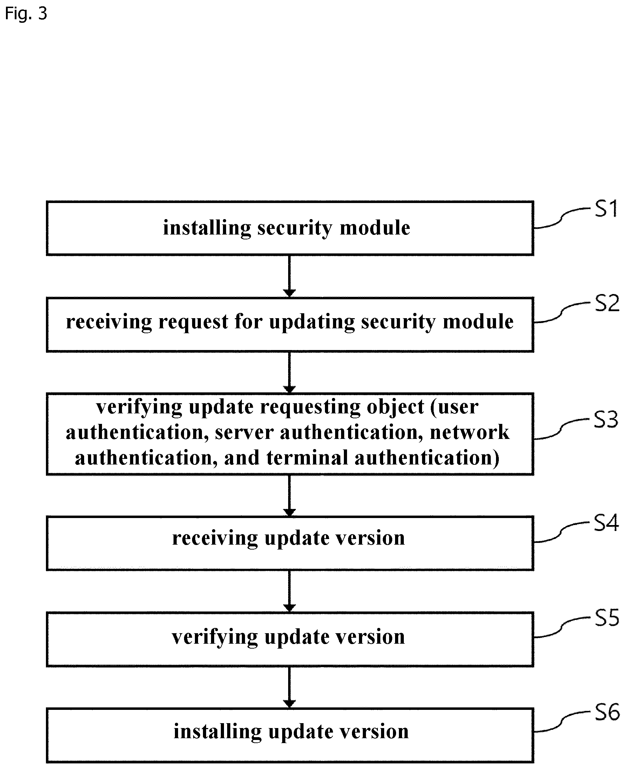

In the meantime, when the update manager 126 of the security module 120 receives a request for update on the security module 120, the update manager 126 may verify an update requesting object, and when a security module update version 130 is received, the update manager 126 may verify the received security module update version 130. In this way, security may be further strengthened through two-factor verification of the update requesting object and the update version. A detailed description of this will be described below with reference to FIG. 3.

FIG. 3 is a diagram illustrating a method for updating a security module of a computer device according to an embodiment of the present disclosure. The following description will be made with reference to FIGS. 1 to 3.

First, in step S1, a computer device 10 installs a separated security module 120 as shown in FIG. 2 at a kernel level. The computer device 10 includes an OS kernel 110 that is installed at the kernel level to operate. The OS kernel 110 includes a security callback function 112. The separated security module 120 installed in step S1 operates at the kernel level, and includes a non-updatable part 122, an updatable part 124, and an update manager 126. The non-updatable part 122 directly interfaces with the OS kernel 110 and is connected to the security callback function 112. The updatable part 124 indirectly interfaces with the OS kernel 110 through the non-updatable part 122. The update manager 126 controls update on the updatable part 124. In particular, the non-updatable part 122 of the security module 120 is configured to hook the security callback function 112 to have code in which the security callback function 112 of the OS kernel 110 refers to the non-updatable part 122.

Next, in step S2, the computer device 10 receives a request for updating the security module 120 from a user. For example, in various environments as shown in FIG. 1, the computer device 10 may receive a request for update. Specifically, the computer device 10 may receive an request for update through an input device from user A, who has directly accessed the computer device 10, or may receive a request for update through a server 20 from user B, who has accessed the server 20 connected to the computer device 10 over an internal communication network, or may receive a request for update through a terminal 40 (or server) and a network 30 from user C, who has accessed the terminal 40 (or server) connected to the computer device 10 over the network 30, or may receive a request for update through a user terminal (not shown) and a cloud 50 from user D, who has accessed the cloud 50 connected to the computer device 10 over the network 30.

Next, in step S3, the computer device 10 verifies an update requesting object. In the specification, the update requesting object refers to a subject or medium, specifically, a user, a server, a network, or a terminal, which sends a request for updating the security module 120 to the computer device 10. Accordingly, in step S3, the update requesting object is determined according to the situation in which the request for update is received in step S2, and verification is performed. The verification may include user authentication, server authentication, network authentication, or terminal authentication.

User authentication is to authenticate whether user A is a legitimate user having an update request authority when the computer device 10 receives a request for update directly from user A. To this end, various known user authentication methods may be applied.

Server authentication is to authenticate whether the server 20 is a server permitted to access or whether the server 20 is a server to which update request authority is granted when the computer device 10 receive a request for update from user B through the server 20. To this end, various known server authentication methods may be applied. In addition, user authentication may be performed concurrently with server authentication.

Network authentication is to authenticate whether the network 30 is a trustworthy network or whether the network 30 is a network permitted to access when the computer device 10 receives a request for update from user C through the network 30 and the terminal 40 (or server) or receives a request for update from user D through the network 30 and the cloud 50. To this end, various known network authentication methods may be applied. In addition, user authentication may be performed concurrently with network authentication.

Terminal authentication is to authenticate whether the terminal 40 (or server) or the user terminal (not shown) is a terminal permitted to access or whether the terminal 40 (or server) or the user terminal (not shown) is a terminal to which update request authority is granted when the computer device 10 receives a request for update from user C through the network 30 and the terminal 40 (or server) or receives a request for update from user D through the cloud 50 and the user terminal (not shown). To this end, various known terminal authentication methods may be applied. In addition, user authentication and/or network authentication may be performed concurrently with terminal authentication.

Next, when the verifying of the update requesting object in step S3 succeeds, the computer device 10 receives a security module update version 130 in step S4. The security module update version 130 corresponds to the updatable part 124 of the security module 120 installed in the computer device 10. Herein, the security module update version 130 may be provided being stored in a storage medium or may be downloaded from an update providing server.

Next, in step S5, the computer device 10 verifies the received security module update version 130. The verifying of the security module update version 130 is to detect malicious software (malware) in the security module update version 130 corresponding to the updatable part 124 of the security module 120. To this end, various known malware diagnosis methods may be applied.

Next, in step S6, the computer device 10 installs the security module update version 130 that has passed verification. That is, the computer device 100 replaces the updatable part 124 of the security module 120 installed at the kernel level with the security module update version 130 to complete the update on the security module 120.

In the meantime, at least some steps among steps S2 to S6 described above may be performed by the update manager 126 of the security module 120.

### [Description of the Reference Numerals in the Drawings]

10: computer device
20: server
30: network
40: terminal
110: OS kernel
112: security callback function
114: security function
120: security module
122: non-updatable part
124: updatable part
126: update manager
130: security module update version
140: security software

## Claims

1. A computer device (10), comprising:
an OS kernel (110) installed at a kernel level to operate, and having a security callback function (112); and
a separated security module (120) installed at the kernel level to operate, and divided into a non-updatable part (122) and an updatable part (124),
wherein the separated security module (120) comprises:
the non-updatable part (122) configured to directly interface with the OS kernel (110) and to be connected to the security callback function (112),
the updatable part (124) configured to indirectly interface with the OS kernel (110) through the non-updatable part (122), and
an update manager (126) configured to control update on the updatable part (124),
wherein the update manager (126) is configured to receive a request for update on the security module (120) and verify an update requesting object, and when the verifying of the update requesting object succeeds, the update manager (126) is configured to receive a security module update version (130) and verify the received security module update version (130),
wherein the update manager (126) is configured to:
determine, when verifying the update requesting object, the update requesting object as one of a user, a server (20), a network (30), and a terminal (40) according to a situation in which the request for update is received,
when the update requesting object is determined as the user, perform user authentication,
when the update requesting object is determined as the server (20), perform server authentication to authenticate whether update request authority is granted to the server (20), or perform the user authentication together with the server authentication,
when the update requesting object is determined as the network (30), perform network authentication to authenticate whether the network (30) is a trustworthy network, or perform the user authentication together with the network authentication, and
when the update requesting object is determined as the terminal (40), perform terminal authentication or perform at least one of the user authentication and the network authentication together with the terminal authentication.

2. The computer device (10) of claim 1, wherein the security callback function (112) of the OS kernel (110) is called in response to a particular activity of the computer device (10), is to transmit a query to the updatable part (124) through the non-updatable part (122), and is to receive a response to the query from the updatable part (124) through the non-updatable part (122).

3. The computer device (10) of claim 1, wherein the non-updatable part (122) of the security module (120) is configured to hook the security callback function (112) to have code in which the security callback function (112) of the OS kernel (110) refers to the non-updatable part (122).

4. The computer device (10) of claim 1, further comprising
security software installed at a user level to operate;
wherein the updatable part (124) is configured to interface with the security software.

5. The computer device (10) of claim 1, wherein the OS kernel (110) further has a security function of providing an access control security policy at the kernel level, and
either the non-updatable part (122) or the updatable part (124) or both are configured to interact with the security function of the OS kernel (110).

6. A method for updating a security module (120) of a computer device (10) including: an OS kernel (110) installed at a kernel level to operate; and a separated security module (120) installed at the kernel level to operate,
wherein the separated security module (120) includes:
a non-updatable part (122) configured to directly interface with the OS kernel (110);
an updatable part (124) configured to indirectly interface with the OS kernel (110) through the non-updatable part (122); and
an update manager (126) configured to control update on the updatable part (124),
the method comprising:
installing the separated security module (120) at the kernel level in step S1;
receiving a request for updating the separated security module (120) in step S2;
verifying an update requesting object that has transmitted the request for updating in step S3;
receiving a security module update version (130) corresponding to the updatable part (124) of the separated security module (120) in step S4;
verifying the received security module update version (130) in step S5; and
installing the security module update version (130) in step S6,
wherein the step S3 includes:
determining the update requesting object as one of a user, a server (20), a network (30), and a terminal (40) according to a situation in which the request for update is received,
when the update requesting object is determined as the user, performing user authentication,
when the update requesting object is determined as the server (20), performing server authentication to authenticate whether update request authority is granted to the server (20), or performing the user authentication together with the server authentication,
when the update requesting object is determined as the network (30), performing network authentication to authenticate whether the network (30) is a trustworthy network, or performing the user authentication together with the network authentication, and
when the update requesting object is determined as the terminal (40), performing terminal authentication or performing at least one of the user authentication and the network authentication together with the terminal authentication.

7. The method of claim 6, wherein in the step S2,
(a) the request for updating is received from a user who has directly accessed the computer device (10),
(b) the request for updating is received through the server (20) from the user who has accessed the server (20) connected to the computer device (10) over an internal communication network,
(c) the request for updating is received through the terminal (40) or the server (20) and through the network (30) from a user who has accessed the terminal (40) or the server (20) connected to the computer device (10) over the network (30), or
(d) the request for updating is received through a user terminal and a cloud from a user who has accessed the cloud connected to the computer device (10) over the network (30).

8. The method of claim 7, wherein in the step S3, at least one selected from a group of user authentication, server authentication, network authentication, and terminal authentication is performed.

## Patentansprüche

1. Rechnervorrichtung (10), umfassend:
einen Betriebssystem-Kernel (110), der zum Betrieb auf einer Kernel-Ebene installiert ist und eine Sicherheits-Callback-Funktion (112) aufweist; und
ein separates Sicherheitsmodul (120), das zum Betrieb auf der Kernel-Ebene installiert ist und in einen nicht aktualisierbaren Teil (122) und einen aktualisierbaren Teil (124) unterteilt ist,
wobei das separate Sicherheitsmodul (120) umfasst:
den nicht aktualisierbaren Teil (122), der dazu eingerichtet ist, direkt mit dem Betriebssystem-Kernel (110) eine Schnittstelle zu bilden und mit der Sicherheits-Callback-Funktion (112) verbunden zu sein,
den aktualisierbaren Teil (124), der dazu eingerichtet ist, über den nicht aktualisierbaren Teil (122) indirekt mit dem Betriebssystem-Kernel (110) eine Schnittstelle zu bilden, und
einen Aktualisierungsmanager (126), der dazu eingerichtet ist, Aktualisierungen auf dem aktualisierbaren Teil (124) zu steuern,
wobei der Aktualisierungsmanager (126) dazu eingerichtet ist, eine Aktualisierungsanforderung für das Sicherheitsmodul (120) zu empfangen und ein Aktualisierungsanforderungsobjekt zu überprüfen, und der Aktualisierungsmanager (126), wenn die Überprüfung des Aktualisierungsanforderungsobjekts erfolgreich ist, dazu eingerichtet ist, eine Sicherheitsmodul-Aktualisierungsversion (130) zu empfangen und die empfangene Sicherheitsmodul-Aktualisierungsversion (130) zu überprüfen,
wobei der Aktualisierungsmanager (126) eingerichtet ist zum:
Bestimmen, wenn das Aktualisierungsanforderungsobjekt überprüft wird, des Aktualisierungsanforderungsobjekts als eines von einem Benutzer, einem Server (20), einem Netzwerk (30) und einem Terminal (40) entsprechend einer Situation, in der die Aktualisierungsanforderung empfangen wird,
wenn das Aktualisierungsanforderungsobjekt als der Benutzer bestimmt wird, Durchführen einer Benutzerauthentifizierung,
wenn das Aktualisierungsanforderungsobjekt als der Server (20) bestimmt wird, Durchführen einer Serverauthentifizierung, um zu authentifizieren, ob dem Server (20) eine Berechtigung zur Aktualisierungsanforderung erteilt wurde, oder Durchführen der Benutzerauthentifizierung zusammen mit der Serverauthentifizierung,
wenn das Aktualisierungsanforderungsobjekt als das Netzwerk (30) bestimmt wird, Durchführen einer Netzwerkauthentifizierung, um zu authentifizieren, ob das Netzwerk (30) ein vertrauenswürdiges Netzwerk ist, oder Durchführen der Benutzerauthentifizierung zusammen mit der Netzwerkauthentifizierung, und
wenn das Aktualisierungsanforderungsobjekt als das Terminal (40) bestimmt wird, Durchführen einer Terminalauthentifizierung oder Durchführen der Benutzerauthentifizierung und/oder der Netzwerkauthentifizierung zusammen mit der Terminalauthentifizierung.

2. Rechnervorrichtung (10) nach Anspruch 1, wobei die Sicherheits-Callback-Funktion (112) des Betriebssystem-Kernels (110) als Reaktion auf eine bestimmte Aktivität der Rechnervorrichtung (10) aufgerufen wird, eine Abfrage über den nicht aktualisierbaren Teil (122) an den aktualisierbaren Teil (124) sendet und eine Antwort auf die Abfrage vom aktualisierbaren Teil (124) über den nicht aktualisierbaren Teil (122) empfängt.

3. Rechnervorrichtung (10) nach Anspruch 1, wobei der nicht aktualisierbare Teil (122) des Sicherheitsmoduls (120) dazu eingerichtet ist, die Sicherheits-Callback-Funktion (112) einzuhaken, um Code aufzuweisen, in dem die Sicherheits-Callback-Funktion (112) des Betriebssystem-Kernels (110) auf den nicht aktualisierbaren Teil (122) verweist.

4. Rechnervorrichtung (10) nach Anspruch 1, weiterhin umfassend
Sicherheitssoftware, die zum Betrieb auf einer Benutzerebene installiert ist;
wobei der aktualisierbare Teil (124) dazu eingerichtet ist, mit der Sicherheitssoftware eine Schnittstelle zu bilden.

5. Rechnervorrichtung (10) nach Anspruch 1, wobei der Betriebssystem-Kernel (110) ferner eine Sicherheitsfunktion aufweist, die eine Sicherheitsrichtlinie zur Zugriffssteuerung auf der Kernel-Ebene bereitstellt, und
der nicht aktualisierbare Teil (122) und/oder der aktualisierbare Teil (124) dazu eingerichtet sind, mit der Sicherheitsfunktion des Betriebssystem-Kernels (110) zu interagieren.

6. Verfahren zum Aktualisieren eines Sicherheitsmoduls (120) einer Rechnervorrichtung (10), umfassend:
einen Betriebssystem-Kernel (110), der für den Betrieb auf einer Kernel-Ebene installiert ist; und
ein separates Sicherheitsmodul (120), das für den Betrieb auf der Kernel-Ebene installiert ist;
wobei das separate Sicherheitsmodul (120) umfasst:
einen nicht aktualisierbaren Teil (122), der dazu eingerichtet ist, direkt mit dem Betriebssystem-Kernel (110) eine Schnittstelle zu bilden;
einen aktualisierbaren Teil (124), der dazu eingerichtet ist, über den nicht aktualisierbaren Teil (122) indirekt mit dem Betriebssystem-Kernel (110) eine Schnittstelle zu bilden; und
einen Aktualisierungsmanager (126), der dazu eingerichtet ist, Aktualisierungen auf dem aktualisierbaren Teil (124) zu steuern,
wobei das Verfahren umfasst:
Installieren des separaten Sicherheitsmoduls (120) auf der Kernel-Ebene in Schritt S1;
Empfangen einer Anforderung zur Aktualisierung des separaten Sicherheitsmoduls (120) in Schritt S2;
Überprüfen eines Aktualisierungsanforderungsobjekts, das die Aktualisierungsanforderung in Schritt S3 gesendet hat;
Empfangen einer Sicherheitsmodul-Aktualisierungsversion (130), die dem aktualisierbaren Teil (124) des separaten Sicherheitsmoduls (120) entspricht, in Schritt S4;
Überprüfen der empfangenen Sicherheitsmodul-Aktualisierungsversion (130) in Schritt S5; und
Installieren der Sicherheitsmodul-Aktualisierungsversion (130) in Schritt S6,
wobei der Schritt S3 umfasst:
Bestimmen des Aktualisierungsanforderungsobjekts als eines von einem Benutzer, einem Server (20), einem Netzwerk (30) und einem Terminal (40) entsprechend einer Situation, in der die Aktualisierungsanforderung empfangen wird,
wenn das Aktualisierungsanforderungsobjekt als der Benutzer bestimmt wird, Durchführen einer Benutzerauthentifizierung,
wenn das Aktualisierungsanforderungsobjekt als der Server (20) bestimmt wird, Durchführen einer Serverauthentifizierung, um zu authentifizieren, ob dem Server (20) die Berechtigung zur Aktualisierungsanforderung erteilt wurde, oder Durchführen der Benutzerauthentifizierung zusammen mit der Serverauthentifizierung,
wenn das Aktualisierungsanforderungsobjekt als das Netzwerk (30) bestimmt wird, Durchführen einer Netzwerkauthentifizierung, um zu authentifizieren, ob das Netzwerk (30) ein vertrauenswürdiges Netzwerk ist, oder Durchführen der Benutzerauthentifizierung zusammen mit der Netzwerkauthentifizierung, und
wenn das Aktualisierungsanforderungsobjekt als das Terminal (40) bestimmt wird, Durchführen einer Terminalauthentifizierung oder Durchführen der Benutzerauthentifizierung und/oder der Netzwerkauthentifizierung zusammen mit der Terminalauthentifizierung.

7. Verfahren nach Anspruch 6, wobei im Schritt S2
(a) die Aktualisierungsanforderung von einem Benutzer empfangen wird, der direkt auf die Rechnervorrichtung (10) zugegriffen hat,
(b) die Aktualisierungsanforderung über den Server (20) von dem Benutzer empfangen wird, der über ein internes Kommunikationsnetzwerk auf den mit der Rechnervorrichtung (10) verbundenen Server (20) zugegriffen hat,
(c) die Aktualisierungsanforderung über das Terminal (40) oder den Server (20) und über das Netzwerk (30) von einem Benutzer empfangen wird, der auf das Terminal (40) oder den Server (20) zugegriffen hat, die über das Netzwerk (30) mit der Rechnervorrichtung (10) verbunden sind, oder
(d) die Aktualisierungsanforderung über ein Benutzerterminal und eine Cloud von einem Benutzer empfangen wird, der auf die Cloud zugegriffen hat, die über das Netzwerk (30) mit der Rechnervorrichtung (10) verbunden ist.

8. Verfahren nach Anspruch 7, wobei im Schritt S3 mindestens eine aus einer Gruppe bestehend aus Benutzerauthentifizierung, Serverauthentifizierung, Netzwerkauthentifizierung und Terminalauthentifizierung ausgewählte Authentifizierung durchgeführt wird.

## Revendications

1. Dispositif informatique (10), comprenant:
un noyau de système d'exploitation (110) installé au niveau du noyau pour assure le fonctionnement, et comportant une fonction de rappel de sécurité (112); et
un module de sécurité séparé (120) installé au niveau du noyau pour assure le fonctionnement, et divisé en une partie (122) ne pouvant pas être mise à jour et une partie (124) pouvant être mise à jour,
dans lequel le module de sécurité séparé (120) comprend:
la partie (122) ne pouvant pas être mise à jour étant configurée pour s'interfacer directement avec le noyau de système d'exploitation (110) et pour être connectée à la fonction de rappel de sécurité (112),
la partie (124) pouvant être mise à jour étant configurée pour s'interfacer indirectement avec le noyau de système d'exploitation (110) par l'intermédiaire de la partie (122) ne pouvant pas être mise à jour, et
un gestionnaire de mise à jour (126) configuré pour commander la mise à jour sur la partie (124) pouvant être mise à jour,
dans lequel le gestionnaire de mise à jour (126) est configuré pour recevoir une demande de mise à jour sur le module de sécurité (120) et vérifier un objet demandant la mise à jour, et lorsque la vérification de l'objet demandant la mise à jour aboutit, le gestionnaire de mise à jour (126) est configuré pour recevoir une version de mise à jour de module de sécurité (130) et vérifier la version de mise à jour de module de sécurité reçue (130),
dans lequel le gestionnaire de mise à jour (126) est configuré pour:
déterminer, lors de la vérification de l'objet demandant la mise à jour, l'objet demandant la mise à jour comme étant l'un parmi un utilisateur, un serveur (20), un réseau (30) et un terminal (40) en fonction d'une situation dans laquelle est reçue la demande de mise à jour,
lorsque l'objet demandant la mise à jour est identifié comme étant l'utilisateur, procéder à l'authentification de l'utilisateur,
lorsque l'objet demandant la mise à jour est identifié comme étant le serveur (20), procéder à l'authentification du serveur afin de vérifier si l'autorisation de demande de mise à jour est accordée au serveur (20), ou procéder à l'authentification de l'utilisateur en même temps que l'authentification du serveur,
lorsque l'objet demandant la mise à jour est identifié comme étant le réseau (30), procéder à l'authentification du réseau afin de vérifier si le réseau (30) est un réseau fiable, ou procéder à l'authentification de l'utilisateur en même temps que l'authentification du réseau, et
lorsque l'objet demandant la mise à jour est identifié comme étant le terminal (40), procéder à l'authentification du terminal ou procéder à au moins une parmi l'authentification de l'utilisateur et l'authentification du réseau en même temps que l'authentification du terminal.

2. Dispositif informatique (10) selon la revendication 1, dans lequel la fonction de rappel de sécurité (112) du noyau de système d'exploitation (110) est appelée en réponse à une activité particulière du dispositif informatique (10), consiste à transmettre une requête à la partie (124) ne pouvant pas être mise à jour par l'intermédiaire de la partie (122) ne pouvant pas être mise à jour, et consiste à recevoir une réponse à la requête provenant de la partie (124) pouvant être mise à jour par le biais de la partie (122) ne pouvant pas être mise à jour.

3. Dispositif informatique (10) selon la revendication 1, dans lequel la partie (122) ne pouvant pas être mise à jour du module de sécurité (120) est configurée pour connecter la fonction de rappel de sécurité (112) afin d'avoir un code dans lequel la fonction de rappel de sécurité (112) du noyau de système d'exploitation (110) fait référence à la partie (122) ne pouvant pas être mise à jour.

4. Dispositif informatique (10) selon la revendication 1, comprenant en outre
le logiciel de sécurité installé au niveau utilisateur pour assurer le fonctionnement;
dans lequel la partie (124) mise à jour est configurée pour s'interfacer avec le logiciel de sécurité.

5. Dispositif informatique (10) selon la revendication 1, dans lequel le noyau de système d'exploitation (110) dispose en outre d'une fonction de sécurité permettant de fournir une politique de sécurité de contrôle d'accès au niveau du noyau, et
soit la partie (122) ne pouvant pas être mise à jour ou la partie (124) pouvant être mise à jour, ou les deux, sont configurées pour interagir avec la fonction de sécurité du noyau de système d'exploitation (110).

6. Procédé de mise à jour d'un module de sécurité (120) d'un dispositif informatique (10) comprenant: un noyau de système d'exploitation (110) installé au niveau du noyau pour y fonctionner; et un module de sécurité séparé 120) installé au niveau du noyau pour y fonctionner,
dans lequel le module de sécurité séparé (120) comporte:
une partie (122) ne pouvant pas être mise à jour configurée pour s'interfacer directement avec le noyau de système d'exploitation (110);
une partie (124) pouvant être mise à jour étant configurée pour s'interfacer indirectement avec le noyau de système d'exploitation (110) par l'intermédiaire de la partie (122) ne pouvant pas être mise à jour; et
un gestionnaire de mise à jour (126) configuré pour commander la mise à jour sur la partie (124) pouvant être mise à jour,
le procédé comprenant:
l'installation du module de sécurité séparé (120) au niveau du noyau à l'étape S1;
la réception d'une demande de mise à jour du module de sécurité séparé (120) à l'étape S2;
la vérification d'un objet de demande de mise à jour qui a transmis la demande de mise à jour à l'étape S3;
la réception d'une version de mise à jour de module de sécurité (130) correspondant à la partie (124) pouvant être mise à jour du module de sécurité séparé (120) à l'étape S4;
la vérification de la version de mise à jour de module de sécurité (130) à l'étape S5; et
l'installation de la version de mise à jour de module de sécurité (130) à l'étape S6,
dans lequel l'étape S3 comprend:
la détermination de l'objet demandant la mise à jour comme étant l'un parmi un utilisateur, un serveur (20), un réseau (30) et un terminal (40) en fonction d'une situation dans laquelle est reçue la demande de mise à jour,
lorsque l'objet demandant la mise à jour est identifié comme étant l'utilisateur, la réalisation d'authentification de l'utilisateur,
lorsque l'objet demandant la mise à jour est identifié comme étant le serveur (20), la réalisation d'authentification du serveur afin de vérifier si l'autorisation de demande de mise à jour est accordée au serveur (20), ou la réalisation d'authentification de l'utilisateur en même temps que l'authentification du serveur,
lorsque l'objet demandant la mise à jour est identifié comme étant le réseau (30), la réalisation d'authentification du réseau afin de vérifier si le réseau (30) est un réseau fiable, ou la réalisation d'authentification de l'utilisateur en même temps que l'authentification du réseau, et
lorsque l'objet demandant la mise à jour est identifié comme étant le terminal (40), la réalisation d'authentification du terminal ou la réalisation d'au moins une parmi l'authentification de l'utilisateur et l'authentification du réseau en même temps que l'authentification du terminal.

7. Procédé selon la revendication 6, dans lequel à l'étape S2,
(a) la demande de mise à jour est reçue en provenance d'un utilisateur qui a directement accédé au dispositif informatique (10),
(b) la demande de mise à jour est reçue par le serveur (20) en provenance de l'utilisateur qui a accédé au serveur (20) connecté au dispositif informatique (10) par l'intermédiaire d'un réseau de communication interne,
(c) la demande de mise à jour est reçue par l'intermédiaire du terminal (40) ou du serveur (20) et par l'intermédiaire du réseau (30) en provenance d'un utilisateur qui a accédé au terminal (40) ou au serveur (20) connecté au dispositif informatique (10) par le biais du réseau (30), ou
(d) la demande de mise à jour est reçue par l'intermédiaire d'un terminal utilisateur et d'un nuage en provenance d'un utilisateur qui a accédé au nuage connecté au dispositif informatique (10) par le réseau (30).

8. Procédé selon la revendication 7, dans lequel à l'étape S3, au moins une opération sélectionnée parmi un groupe comprenant l'authentification de l'utilisateur, l'authentification du serveur, l'authentification du réseau et l'authentification du terminal est effectuée.
